# FASCICULE DE BREVET EUROPEEN

(11) **EP 3 397 520 B1**
(45) Date de publication et mention de la délivrance du brevet: **25.03.2020**
(21) Numéro de dépôt: 16829273.8
(22) Date de dépôt: 22.12.2016
(51) Int. Cl.: B60Q 1/26

(54) **PIÈCE EXTÉRIEURE DE VÉHICULE AUTOMOBILE COMPORTANT UN TISSU ÉCLAIRANT**
KRAFTFAHRZEUGAUSSENTEIL MIT EINEM LEUCHTENDEN GEWEBE
MOTOR VEHICLE EXTERIOR PART COMPRISING AN ILLUMINATING FABRIC

(30) Priorité: 30.12.2015 FR 1563456
(43) Date de publication de la demande: 07.11.2018
(73) Titulaire: Compagnie Plastic Omnium, 69007 Lyon (FR)
(72) Inventeur: ESCOFFIER, Arnaud, 69009 Lyon (FR); VILQUIN, Gilles, 69100 Villeurbanne (FR)
(74) Mandataire: LLR
(86) Numéro de dépôt international: PCT/FR2016/053629
(87) Numéro de publication internationale: WO 2017/115035

(56) Documents cités:
- EP-A1- 2 648 023
- FR-A1- 2 989 042
- US-A1- 2006 087 864
- US-A1- 2009 161 378

## Description

La présente invention concerne une pièce extérieure de véhicule automobile, plus particulièrement une telle pièce comportant un tissu éclairant destiné à répondre à la fonction d'éclairage du véhicule.

Des pièces extérieures comportant un dispositif d'éclairage sont prévues sur un véhicule automobile, soit pour améliorer la sécurité comme imposé par des lois ou règlements, soit pour contribuer à l'aspect général extérieur du véhicule. Voici quelques exemples non limitatifs : les feux de croisement, de position, d'arrêt, de recul, de côté, de dépassement, de détresse, d'éclairage de plaque de police, les feux antibrouillards, les clignotants, les phares, les baguettes chromées courant le long de la partie latérale du véhicule, les protections de bas de caisse, le logo d'une marque, les enjoliveurs de poignées de porte, les coques de rétroviseurs. Par extension, toutes les pièces de la carrosserie visibles de l'extérieur avec une fonction d'éclairage peuvent entrer dans le champ d'application de l'invention.

Actuellement, la fonction d'éclairage sur des pièces peut être réalisée au moyen de différents types d'éclairages, notamment des lampes halogène, des lampes au xénon, des LEDs (diodes électroluminescentes) ou OLEDs (diodes électroluminescentes organiques), ou encore des lasers.

Avec de tels dispositifs d'éclairage lors d'un choc, même à vitesse réduite, la partie optique est généralement la première impactée et le moindre endommagement nécessite le remplacement de tout le bloc optique, ce qui peut être compliqué et générer des coûts relativement importants.

Les documents US2006087864A1, US2009/161378 A1, EP2648023 A1 et FR2989042A1 proposent d'assurer la fonction d'éclairage avec un tissu comportant des fibres optiques mais chacun d'entre eux présente des inconvénients.

L'invention a notamment pour but de fournir une alternative aux dispositifs d'éclairage existants, permettant de faciliter le remplacement de la pièce extérieure en cas de chocs.

A cet effet, l'invention a pour objet une pièce extérieure de véhicule automobile comprenant un tissu éclairant et un support de réception du tissu éclairant. Le tissu éclairant comprend une partie éclairée comportant des fibres optiques et une partie de fixation, non éclairée, le support comprenant des moyens d'assemblage du tissu éclairant dans le support, coopérant avec la partie de fixation du tissu éclairant, seule la partie éclairée étant munie de fibres optiques.

Ainsi, on propose d'utiliser un tissu éclairant pour répondre à une fonction d'éclairage à l'extérieur du véhicule, ce qui présente un certain nombre d'avantages. En particulier, un tissu éclairant est très souple par rapport à un dispositif d'éclairage classique, de sorte qu'en cas de choc il sera peu endommagé et en parfait état de fonctionnement, tout en pouvant se conformer facilement à des formes de la pièce extérieure très variées. Par ailleurs, un tissu éclairant est peu encombrant, en général avec une épaisseur comprise entre 0.5 mm et 1 mm. Un autre avantage réside dans le fait qu'un tissu éclairant peut être facile à personnaliser en variant les couleurs de la lumière et/ou des motifs disposés sur le tissu. Ainsi, une application particulièrement intéressante est de proposer facilement à l'utilisateur une signature lumineuse personnalisée de son véhicule. Pour pouvoir utiliser un tel tissu, on a prévu un support de réception du tissu éclairant, qui assure notamment un positionnement et un maintien du tissu sur la pièce extérieure de véhicule. Ce support est avantageusement facilement montable et démontable de la pièce extérieure, facile et peu cher à fabriquer. Ainsi, le dispositif d'éclairage de la pièce extérieure permet une réparation facile en cas de choc. Il suffit de démonter le support portant le tissu et d'installer au choix un nouveau tissu si le tissu a été endommagé et/ou un nouveau support si le support a été endommagé et/ou une nouvelle pièce extérieure si la pièce extérieure a été endommagée, sachant qu'avantageusement il n'est pas nécessaire de remplacer la source de lumière si cette dernière est disposée à distance, à l'abri des chocs. Il convient de relever que la possibilité d'utiliser, grâce au tissu éclairant, une source de lumière déportée est un avantage particulièrement intéressant car cela permet de disposer le système d'éclairage, qui est généralement très couteux, dans une zone non endommagée lors d'un crash et/ou très facilement accessible. Par ailleurs, la pièce extérieure proposée ici est peu encombrante et facilement personnalisable, ce qui donne aux concepteurs de véhicule plus de liberté de design. En outre, étant donné que le tissu éclairant comprend une partie éclairée comportant des fibres optiques et une partie de fixation, non éclairée et que le support comprend des moyens d'assemblage du tissu éclairant dans le support, coopérant avec la partie de fixation du tissu éclairant, on optimise le tissu de façon à ce que seule la partie ayant pour fonction d'être éclairée soit munie de fibres optiques, la partie de fixation composant une zone technique, non visible depuis l'extérieur.

Dans la présente description, on entend généralement par « tissu éclairant » un ensemble de fibres naturelles et/ou synthétiques comprenant des fibres optiques insérées à travers des mailles du tissu. Ces fibres optiques sont généralement raccordées à une source lumineuse, telle qu'une ou plusieurs diodes. Ces fibres optiques peuvent être éclairées à partir de l'une ou de chacune de leurs extrémités jouant le rôle de portion d'alimentation, afin de rendre lumineuse la pièce de tissu correspondant. Un tel tissu est par exemple décrit dans le document EP1675985. Dans ces tissus éclairants, les fibres optiques constituent généralement des fils de trame et ou les fils de chaîne, et sont éventuellement associées à des fibres classiques, par exemple du coton, du lin, de la soie, ou encore des fibres textiles synthétiques. Un exemple d'application d'un tel tissu est donné dans le document WO 2012/098488, où on le dispose en contact avec la peau d'un utilisateur dans un but esthétique.

On comprend que l'utilisation de tissu éclairant à la place des dispositifs d'éclairage habituels est particulièrement intéressante. En particulier, bien que les ampoules halogènes soient peu chères et éclairent correctement, elles ont une durée de vie relativement limitée. Par ailleurs, elles consomment une quantité relativement importante d'électricité, donc chauffent énormément. Par ailleurs, les ampoules au xénon présentent certes des avantages par rapport aux ampoules halogène, par exemple, elles durent plus longtemps et fournissent un éclairage plus puissant ; toutefois, elles sont relativement chères en raison de la rareté du gaz xénon. Les LEDs sont quant à elle de plus en plus utilisées sur les véhicules, notamment parce qu'elles sont particulièrement économes en énergie et donnent plus de liberté aux concepteurs au niveau des formes. Cependant, les LEDs fonctionnent moins bien en présence de forte chaleur. En outre, une autre difficulté des LEDs réside dans le fait qu'une utilisation directe peut créer des « points chauds » qui peuvent être disgracieux, tout particulièrement lorsque les designers cherche de l'homogénéité. Enfin, l'éclairage avec des lasers peut certes consommer peu d'énergie, avec une distance d'éclairage importante, néanmoins les coûts sont trop élevés pour le moment de sorte que leur usage reste relativement limité.

La pièce extérieure peut en outre comporter l'une ou plusieurs des caractéristiques suivantes, prises seules ou en combinaison.
- Le support comprend une partie intérieure et une partie extérieure, les deux parties étant rapportées l'une sur l'autre de façon à prendre le tissu éclairant en sandwich. De façon avantageuse, les deux parties sont venues de moulage de façon à former une pièce unique. Généralement, le support prend le tissu éclairant en sandwich par pincement, en rapprochant la partie extérieure et la partie intérieure jusqu'à ce que ces deux parties s'assemblent l'une avec l'autre. On comprend que la partie intérieure est une partie orientée vers l'intérieur du véhicule et la partie extérieure est une partie orientée vers l'extérieur du véhicule, plus précisément vers un observateur se trouvant à l'extérieur du véhicule.
- La partie extérieure comprend une zone transparente recouvrant au moins partiellement une partie éclairée du tissu éclairant. Cette zone peut être réalisée dans une matière plastique, transparente à la lumière ou translucide, telle que du polycarbonate (PC), du polyméthacrylate de méthyle (PMMA), de l'acrylonitrile butadiène styrène translucide (ABS) ou encore de l'acrylonitrile styrène acrylate (ASA), du styrène acrilonitrile (SAN), un mélange d'acrylonitrile styrène acrylate (ASA) et de polycarbonate (PC), ou encore un mélange de polycarbonate (PC) et de polytéréphtalate d'éthylène. Grâce à cette zone, le tissu éclairant est bien protégé, les risques d'être endommagé sont donc réduits.

- La partie extérieure comprend un cadre laissant découverte au moins partiellement une partie éclairée du tissu éclairant. Dans ce cas, le tissu peut se trouver dans une zone en retrait par rapport au cadre, de sorte que seul le cadre subit un petit choc extérieur, évitant d'endommager le tissu ou de rayer une zone transparente.
- Le support comporte des moyens d'assemblage comportant des éléments, tels que des nervures, des orifices, des pions, réalisés respectivement sur la partie intérieure et la partie extérieure du support, de préférence dans une zone correspondant à une partie de fixation du tissu éclairant, et coopérant les uns avec les autres de façon à pincer la partie de fixation du tissu éclairant. A l'aide de ces moyens d'assemblage, il est très facile à disposer le tissu entre la partie intérieure et la partie extérieure, avec une bonne répétabilité du positionnement du tissu dans le support.
- Le support est surmoulé par injection de matière sur le tissu éclairant, le tissu éclairant comportant de préférence des orifices de passage de matière injectée ou encore un traitement du tissu éclairant pour permettre une bonne accroche avec la matière plastique injectée. Ainsi, le support et le tissu constituent un module assurant une bonne étanchéité et facile à mettre en œuvre. Les orifices de passage de matière injectée réalisés dans le tissu permettent d'améliorer la qualité de la fixation du tissu à l'intérieur du support.
- Le support est formé par bi-injection d'une première matière plastique opaque, telle que du polypropylène (PP) et/ou du polyamide (PA), et d'une deuxième matière plastique transparente, telle que du polycarbonate (PC), du polyméthacrylate de méthyle (PMMA), de l'acrylonitrile butadiène styrène translucide (ABS) ou encore de l'acrylonitrile styrène acrylate (ASA), du styrène acrilonitrile (SAN), un mélange d'acrylonitrile styrène acrylate (ASA) et de polycarbonate (PC), ou encore un mélange de polycarbonate (PC) et de polytéréphtalate d'éthylène.
- Le tissu éclairant est raccordé à une source de lumière, par exemple une ou plusieurs diodes électroluminescentes, située à une certaine distance du tissu éclairant, dans une partie du véhicule se trouvant à l'abri des agressions externes, notamment des agressions climatiques ou de chocs. Ainsi, la source de lumière est déportée à distance de zones d'impacts, de préférence dans une zone intérieure peu exposée à des chocs extérieurs, donc présente moins de risques d'être endommagée lors de chocs. La zone d'accueil de la source de lumière est avantageusement choisie en fonction de l'encombrement disponible, sa faible exposition en cas de choc et idéalement de son étanchéité. En effet, avoir la source lumineuse en zone sèche permet d'éviter l'étanchéisation du bloc optique qui peut être très onéreuse.
- Le support comporte à son extrémité une ou des fentes de passage de fibres optiques pour la connexion de fibres optiques avec une source de lumière.
- Le support comporte des moyens de fixation du support sur la pièce extérieure de véhicule, notamment par encliquetage, rivetage, vissage, collage ou encore soudage.
- La pièce extérieure de véhicule automobile fait partie du groupe comprenant une peau de pare-chocs avant ou arrière, un hayon arrière, une aile avant ou arrière, un bas de caisse, une porte latérale, une arche de roue, un toit, une coque de rétroviseur.
- Le tissu éclairant constitue ou fait partie d'un dispositif d'éclairage ayant une fonction esthétique et/ou réglementaire, faisant partie du groupe comprenant des feux de croisement, de position, d'arrêt, de recul, de côté, de dépassement, de détresse, d'éclairage de plaque de police, des feux antibrouillards, des clignotants, des phares, des baguettes chromées courant le long d'une partie latérale du véhicule, des protections de bas de caisse, un logo d'une marque, des enjoliveurs de poignées de porte, des coques de rétroviseurs.

L'invention a également pour objet un véhicule automobile comprenant une pièce extérieure telle que présentée ci-dessus.

L'invention sera mieux comprise à la lecture des figures annexées, qui sont fournies à titre d'exemples et ne présentent aucun caractère limitatif, dans lesquelles :
- La figure 1 est une vue en perspective d'une partie d'une pièce extérieure de véhicule automobile selon un mode de réalisation.
- La figure 2 est une vue en perspective d'un tissu éclairant de la pièce extérieure de la figure 1.
- La figure 3 est une vue en perspective d'un support de réception du tissu éclairant selon un premier mode de réalisation.
- La figure 4 est une vue en perspective d'un support de réception du tissu éclairant selon un deuxième mode de réalisation.
- La figure 5 est une vue en perspective d'un support de réception du tissu éclairant selon un troisième mode de réalisation.
- La figure 6 est une vue en perspective d'un support de réception du tissu éclairant selon un quatrième mode de réalisation.

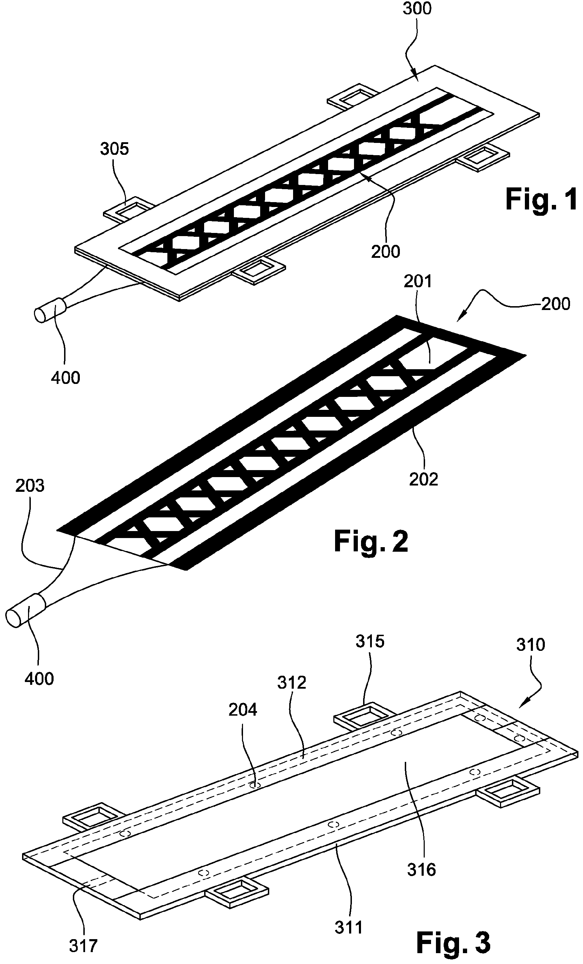

On a illustré en perspective sur la figure 1 une partie d'une pièce extérieure de véhicule automobile selon un mode de réalisation. La pièce extérieure peut être toute pièce se trouvant à l'extérieur d'un véhicule qui a entre autres une fonction d'éclairage, par exemple, les feux de croisement, de position, d'arrêt, de recul, de côté, de dépassement, de détresse, d'éclairage de plaque de police, des feux antibrouillards, des clignotants, des phares, des baguettes chromées courant le long de la partie latérale du véhicule, des protections de bas de caisse, un logo d'une marque, des enjoliveurs de poignées de porte, des coques de rétroviseurs.

Comme montré sur la figure 1, la pièce extérieure comprend un tissu éclairant 200 et un support 300 de réception du tissu éclairant, assurant un positionnement et un maintien du tissu 200 sur la pièce extérieur de véhicule. Dans ce mode de réalisation, le support 300 et le tissu 200 se présentent sous forme plane. Il est bien évident que leurs formes peuvent être adaptées à la pièce extérieure sur laquelle ils sont montés. En particulier selon une application avantageuse, il se présentent sous forme galbée.

Le tissu 200 est positionné et maintenu dans le support 300 au moyen de différentes technologies, comme présentés en plus détails dans ce qui suit. Le support 300 est monté sur la pièce extérieure à l'aide des moyens de fixation 305.

Le tissu 200 est représenté plus en détails sur la figure 2. Il comprend une partie éclairée 201 comportant des fibres optiques et une partie de fixation 202, de préférence non éclairée. De préférence, les fibres optiques sont agencées de telle manière que la lumière sortante est émise dans une direction perpendiculaire au plan formé par ces fibres optiques. La partie éclairée 201 du tissu peut comporter des motifs particuliers tels qu'un logo de la marque du constructeur ou un monogramme, comme cela est représenté sur les figures 1 et 2. Dans cet exemple, la partie de fixation 202 du tissu 200 est pincée au moins partiellement dans le support 300, assurant ainsi le positionnement et le maintien du tissu 200 dans le support 300.

Le tissu 200 est raccordé à une source de lumière 400, telle qu'une ou plusieurs diodes électroluminescentes. Dans le mode de réalisation illustré, la source de lumière 400 se trouve à une certaine distance du tissu 200, avantageusement dans une partie du véhicule se trouvant à l'abri des agressions externes. A cet effet, il est prévu dans le support une fente 317, 327, 337, 347 (cf. figures 3-6) de passage de fibres optiques 203 pour la connexion de fibres optiques 203 avec la source de lumière 400. Ainsi, la source de lumière n'est pas exposée aux chocs ni aux conditions climatiques, donc présente moins de risques d'être endommagée. Sa durée de vie peut alors être augmentée.

On va maintenant décrire le support selon quatre modes de réalisation, en référence respectivement aux figures 3 à 6.

Selon un premier mode de réalisation, illustré à la figure 3, le support 310 comprend une partie intérieure 311 et une partie extérieure 312, les deux parties étant venues de matière. Dans ce mode de réalisation, le support 310 est surmoulé par injection de matière, de préférence thermoplastique, sur le tissu (représenté en lignes pointillées sur la figure 3). Afin d'améliorer la qualité de la fixation entre le tissu et le support, le tissu peut comporter des orifices 204 de passage de matière injectée, de préférence dans la partie de fixation 202.

La partie extérieure 312 du support 310 comporte une zone 316 laissant découverte au moins partiellement la partie éclairée 201 du tissu 200. Cette zone peut être une simple ouverture. En d'autres termes, la partie extérieure 312 peut comporter un cadre dont l'ouverture constitue la zone 316. Selon une variante, cette zone peut être recouverte d'une couche de protection du tissu, réalisée dans une matière plastique, transparente à lumière ou translucide. Dans ce cas, il est intéressant de former le support par bi-injection d'une première matière plastique opaque, telle que du polypropylène (PP) et/ou du polyamide (PA), qui constituera la partie intérieure 311 et une zone de la partie extérieure 312, formant un cadre autour de la couche de protection recouvrant la zone 316 ; et d'une deuxième matière plastique transparente, telle que du polycarbonate (PC), du polyméthacrylate de méthyle (PMMA), de l'acrylonitrile butadiène styrène translucide (ABS) ou encore de l'acrylonitrile styrène acrylate (ASA), du styrène acrilonitrile (SAN), un mélange d'acrylonitrile styrène acrylate (ASA) et de polycarbonate (PC), ou encore un mélange de polycarbonate (PC) et de polytéréphtalate d'éthylène, qui constituera la couche de protection de la partie extérieure 312. Grâce à la couche de protection, le tissu éclairant est bien protégé, les risques d'être endommagé sont donc réduits.

Comme évoqué plus haut, le support 310 comprend une fente 317 de passage de fibres optiques 203 pour la connexion de fibres optiques 203 avec la source de lumière 400. Cette fente 317 est créée naturellement lors du surmoulage du fait de la présence des fibres 203

Enfin, le support 310 comporte des moyens de fixation 315 du support sur la pièce extérieure de véhicule, réalisés sous forme d'ouvertures d'encliquetage, au nombre de 4 ici, coopérant avec des éléments d'encliquetage agencés sur la pièce extérieure de sorte à fixer le support 310 sur cette dernière. Les moyens de fixation peuvent prendre d'autres formes, par exemple des moyens de rivetage, de vissage, de collage ou encore de soudage.

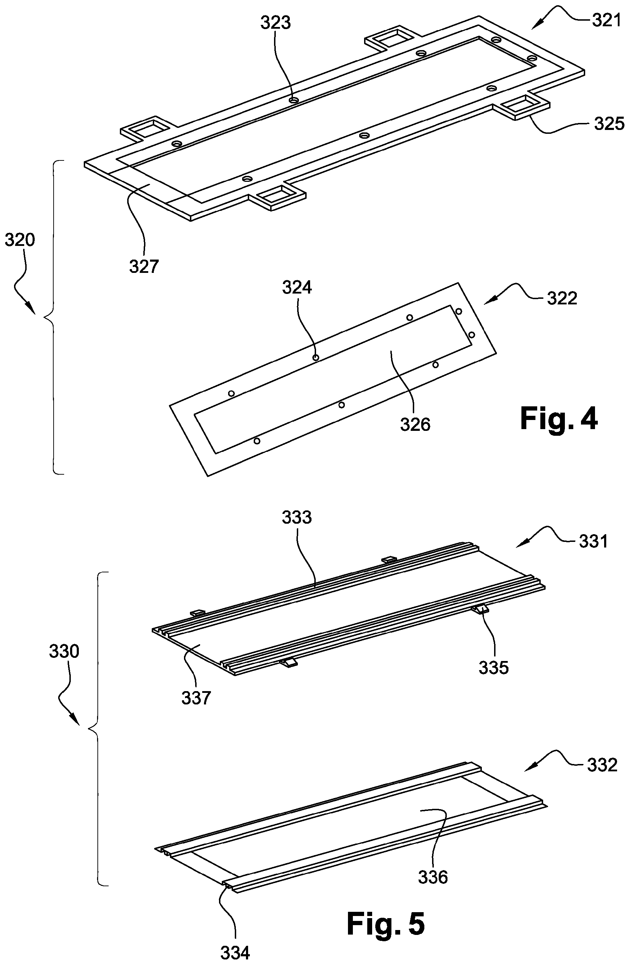

Selon un second mode de réalisation, illustré sur la figure 4, le support 320 comprend une partie intérieure 321 et une partie extérieure 322, les deux parties étant rapportées l'une sur l'autre, de façon à prendre le tissu éclairant 200 en sandwich. Pour ce faire, le support 320 comporte des moyens d'assemblage réalisés respectivement sur sa partie intérieure 321 et sa partie extérieure 322 et coopérant les uns avec les autres de façon à pincer la partie de fixation 202 du tissu 200. De préférence, ces moyens d'assemblage sont réalisés dans une zone correspondant à la partie de fixation 202 du tissu 200. Dans ce mode de réalisation, les moyens d'assemblage comportent des orifices 323 ménagés dans la partie intérieure 321 et des pions 324 ménagés sur la partie extérieure 322, coopérant les un avec les autres de façon à pincer le tissu 200 pourvu des orifices correspondants. Naturellement, on peut prévoir des orifices dans la partie extérieure 322 et des pions sur la partie intérieure 321.

Comme on a vu dans le premier mode de réalisation, la partie extérieure 322 du support 320 comporte également une zone 326 laissant découverte au moins partiellement la partie éclairée 201 du tissu 200. Les caractéristiques liées à cette zone sont identiques à celles exposées dans le premier mode de réalisation et ne seront donc pas répétées ici, de même pour la fente 327 de passage de fibres optiques et les moyens de fixation 325 du support sur la pièce extérieure.

Selon un troisième mode de réalisation, similaire au deuxième et illustré sur la figure 5, le support 330 comprend une partie intérieure 331 et une partie extérieure 332, les deux parties étant rapportées l'une sur l'autre, de façon à prendre le tissu éclairant 200 en sandwich. Pour ce faire, le support 330 comporte des moyens d'assemblage réalisés respectivement sur sa partie intérieure 331 et sa partie extérieure 332 et coopérant les uns avec les autres de façon à pincer la partie de fixation 202 du tissu 200. De préférence, ces moyens d'assemblage sont réalisés dans une zone correspondant à la partie de fixation 202 du tissu 200. Dans ce mode de réalisation, les moyens d'assemblage comportent des nervures 333 ménagés dans la partie intérieure 331 et des nervures 334 ménagés sur la partie extérieure 332, coopérant les un avec les autres de façon à pincer le tissu 200. De préférence, les nervures s'étendent sur toute la longueur du support, assurant ainsi une meilleure rétention du tissu dans le support.

Comme on a vu dans le premier mode de réalisation, la partie extérieure 332 du support 330 comporte également une zone 336 laissant découverte au moins partiellement la partie éclairée 201 du tissu 200. Les caractéristiques liées à cette zone sont identiques à celles exposées dans le premier mode de réalisation et ne seront donc pas répétées ici, de même pour la fente 337 de passage de fibres optiques. Dans ce mode de réalisation, des moyens de fixation 335 du support sur la pièce extérieure réalisés sous forme de protubérances d'encliquetage sont illustrés.

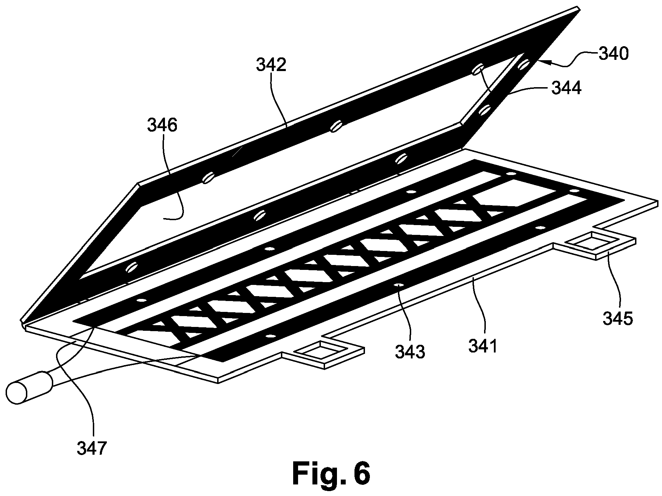

Selon un quatrième mode de réalisation, similaire au deuxième et illustré sur la figure 6, le support 340 comprend une partie intérieure 341 et une partie extérieure 342, les deux parties formant une pièce unique inséparable. Plus précisément, les parties 341 et 342 sont venues de moulage le long d'un de leur bord longitudinal, le côté opposé de chacune des parties 341 et 342 étant rapporté l'un sur l'autre par pliage au niveau de ce bord longitudinal, de façon que le support se ferme en prenant le tissu éclairant 200 en sandwich. Le support 340 comporte des moyens d'assemblage réalisés respectivement sur sa partie intérieure 341 et sa partie extérieure 342 et coopérant les uns avec les autres de façon à pincer le tissu 200. De préférence, ces moyens d'assemblage sont réalisés dans une zone correspondant à la partie de fixation 202 du tissu 200. Dans ce mode de réalisation, les moyens d'assemblage comportent des orifices 343 ménagés dans la partie intérieure 341 et des pions 344 ménagés sur la partie extérieure 342, coopérant les un avec les autres de façon à pincer le tissu 200 pourvu des orifices correspondants. Naturellement, on peut prévoir des orifices dans la partie extérieure 342 et des pions sur la partie intérieure 341.

Comme on a vu dans le premier mode de réalisation, la partie extérieure 342 du support 340 comporte également une zone 346 laissant découverte au moins partiellement la partie éclairée 201 du tissu 200. Les caractéristiques liées à cette zone sont identiques à celles exposées dans le premier mode de réalisation et ne seront donc pas répétées ici, de même pour la fente 347 de passage de fibres optiques et les moyens de fixation 345 du support sur la pièce extérieure.

Bien que l'invention soit ici décrite selon plusieurs modes de réalisation, il est évident qu'elle n'est nullement limitée par ces modes et qu'on peut lui apporter différentes variantes et modifications sans pour autant sortir de son cadre défini par les revendications annexées.

## Revendications

1. Pièce extérieure de véhicule automobile comprenant un tissu éclairant (200) et un support (300 ; 310 ; 320 ; 330 ; 340) de réception du tissu éclairant,**caractérisée en ce que** le tissu éclairant (200) comprend une partie éclairée (201) comportant des fibres optiques et une partie de fixation (202), non éclairée, le support (300 ; 310 ; 320 ; 330 ; 340) comprenant des moyens d'assemblage du tissu éclairant (200) dans le support (300 ; 310 ; 320 ; 330 ; 340), coopérant avec la partie de fixation (202) du tissu éclairant (200), seule la partie éclairée (201) étant munie de fibres optiques.

2. Pièce extérieure selon la revendication précédente, dans laquelle le support (300 ; 310 ; 320 ; 330 ; 340) comprend une partie intérieure (311 ; 321 ; 331 ; 341) et une partie extérieure (312 ; 322 ; 332 ; 342), les deux parties étant rapportées l'une sur l'autre ou venues de matière, de façon à prendre le tissu éclairant (200) en sandwich.

3. Pièce extérieure selon la revendication précédente, dans laquelle la partie extérieure (312 ; 322 ; 332 ; 342) comprend une zone transparente (316 ; 326 ; 336 ; 346) recouvrant au moins partiellement une partie éclairée (201) du tissu éclairant (200).

4. Pièce extérieure selon la revendication 2, dans laquelle la partie extérieure (312 ; 322 ; 332 ; 342) comprend un cadre laissant découverte au moins partiellement une partie éclairée (201) du tissu éclairant (200).

5. Pièce extérieure selon l'une quelconque des revendications 2 à 4, dans laquelle le support (300 ; 310 ; 320 ; 330 ; 340) comporte des moyens d'assemblage comportant des éléments, tels que des nervures (333 ; 334), des orifices (323 ;343), des pions (324 ; 344), réalisés respectivement sur la partie intérieure (321 ; 331; 341) et la partie extérieure (322 ; 332 ; 342) du support (300 ; 320 ; 330 ; 340), de préférence dans une zone correspondant à une partie de fixation (202) du tissu éclairant (200), et coopérant les uns avec les autres de façon à pincer la partie de fixation du tissu éclairant (200).

6. Pièce extérieure selon l'une quelconque des revendications précédentes, dans laquelle le support (310) est surmoulé par injection de matière sur le tissu éclairant (200), le tissu éclairant (200) comportant de préférence des orifices (204) de passage de matière injectée, ou encore un traitement du tissu éclairant pour permettre une bonne accroche avec la matière plastique injectée.

7. Pièce extérieure selon l'une quelconque des revendications précédentes, dans laquelle le support (310 ; 340) est formé par bi-injection d'une première matière plastique opaque, telle que du polypropylène (PP) et/ou du polyamide (PA), et d'une deuxième matière plastique transparente, telle que du polycarbonate (PC), du polyméthacrylate de méthyle (PMMA), de l'acrylonitrile butadiène styrène translucide (ABS) ou encore de l'acrylonitrile styrène acrylate (ASA), du styrène acrilonitrile (SAN), un mélange d'acrylonitrile styrène acrylate (ASA) et de polycarbonate (PC), ou encore un mélange de polycarbonate (PC) et de polytéréphtalate d'éthylène.

8. Pièce extérieure selon l'une quelconque des revendications précédentes, dans laquelle le tissu éclairant (200) est raccordé à une source de lumière (400), par exemple une diode électroluminescente, située à une certaine distance du tissu éclairant (200), dans une partie du véhicule se trouvant à l'abri des agressions externes.

9. Pièce extérieure selon l'une quelconque des revendications précédentes, dans laquelle le support (300 ; 310 ; 320 ; 330 ; 340) comporte à son extrémité une ou des fentes (317 ; 327 ; 337 ; 347) de passage de fibres optiques (203) pour la connexion de fibres optiques avec une source de lumière (400).

10. Pièce extérieure selon l'une quelconque des revendications précédentes, dans laquelle le support (300 ; 310 ; 320 ; 330 ; 340) comporte des moyens de fixation (305 ; 315 ; 325 ; 335 ; 345) du support (300 ; 310 ; 320 ; 330 ; 340) sur la pièce extérieure de véhicule, notamment par encliquetage, rivetage, vissage, collage ou encore soudage.

## Patentansprüche

1. Außenteil für Kraftfahrzeug, umfassend ein leuchtendes Gewebe (200) und einen Träger (300; 310; 320; 330; 340) zur Aufnahme des leuchtenden Gewebes, **dadurch gekennzeichnet, dass** das leuchtende Gewebe (200) einen beleuchteten Teil (201), der Lichtwellenleiter aufweist, und einen nicht beleuchteten Befestigungsteil (202) umfasst, wobei der Träger (300; 310; 320; 330; 340) Mittel zum Montieren des leuchtenden Gewebes (200) in dem Träger (300; 310; 320; 330; 340) umfasst, die mit dem Befestigungsteil (202) des leuchtenden Gewebes (200) zusammenwirken, wobei nur der beleuchtete Teil (201) mit Lichtwellenleitern versehen ist.

2. Außenteil nach dem vorhergehenden Anspruch, wobei der Träger (300; 310; 320; 330; 340) einen inneren Teil (311; 321; 331; 341) und einen äußeren Teil (312; 322; 332; 342) umfasst, wobei die zwei Teile aneinander angebracht oder einstückig so ausgebildet sind, dass sie das leuchtende Gewebe (200) sandwichartig in Eingriff nehmen.

3. Außenteil nach dem vorhergehenden Anspruch, wobei der äußere Teil (312; 322; 332; 342) eine transparente Zone (316; 326; 336; 346) umfasst, die wenigstens teilweise einen beleuchteten Teil (201) des leuchtenden Gewebes (200) bedeckt.

4. Außenteil nach Anspruch 2, wobei der äußere Teil (312; 322; 332; 342) einen Rahmen umfasst, der wenigstens teilweise einen beleuchteten Teil (201) des leuchtenden Gewebes (200) unbedeckt lässt.

5. Außenteil nach einem der Ansprüche 2 bis 4, wobei der Träger (300; 310; 320; 330; 340) Montagemittel aufweist, die Elemente, wie Rippen (333; 334), Öffnungen (323; 343), Stifte (324; 344), aufweisen, die entsprechend auf dem inneren Teil (321; 331; 341) und dem äußeren Teil (322; 332; 342) des Trägers (300; 320; 330; 340) ausgebildet sind, vorzugsweise in einer Zone, die einem Befestigungsteil (202) des leuchtenden Gewebes (200) entspricht, und die miteinander so zusammenwirken, dass sie den Befestigungsteil des leuchtenden Gewebes (200) einklemmen.

6. Außenteil nach einem der vorhergehenden Ansprüche, wobei der Träger (310) durch Einspritzen von Material auf dem leuchtenden Gewebe (200) aufgeformt ist, wobei das leuchtende Gewebe (200) vorzugsweise Öffnungen (204) für den Durchtritt von eingespritztem Material aufweist, oder auch eine Behandlung des leuchtenden Gewebes, um einen guten Angriff mit dem eingespritztem Kunststoff zu gestatten.

7. Außenteil nach einem der vorhergehenden Ansprüche, wobei der Träger (310; 340) durch Bi-Injektion eines ersten opaken Kunststoffs, wie Polypropylen (PP) und/oder Polyamid (PA), und eines zweiten transparenten Kunststoffs, wie Polycarbonat (PC), Polymethylmethacrylat (PMMA), durchscheinendes Acrylnitril-Butadien-Styrol (ABS) oder auch Acrylnitril-Styrol-Acrylat (ASA), Styrol-Acrylnitril (SAN), ein Gemisch aus Acrylnitril-Styrol-Acrylat (ASA) und aus Polycarbonat (PC), oder auch ein Gemisch aus Polycarbonat (PC) und aus Polyethylenterephthalat, gebildet ist.

8. Außenteil nach einem der vorhergehenden Ansprüche, wobei das leuchtende Gewebe (200) mit einer Lichtquelle (400), zum Beispiel einer Leuchtdiode, verbunden ist, die sich in einem bestimmten Abstand zu dem leuchtenden Gewebe (200) befindet, in einem Teil des Fahrzeugs, das vor äußeren Einflüssen geschützt ist.

9. Außenteil nach einem der vorhergehenden Ansprüche, wobei der Träger (300; 310; 320; 330; 340) an seinem Ende einen oder mehrere Schlitze (317; 327; 337; 347) für den Durchtritt von Lichtwellenleitern (203) für die Verbindung von Lichtwellenleitern mit einer Lichtquelle (400) aufweist.

10. Außenteil nach einem der vorhergehenden Ansprüche, wobei der Träger (300; 310; 320; 330; 340) Mittel zur Befestigung (305; 315; 325; 335; 345) des Trägers (300; 310; 320; 330; 340) an dem Außenteil für Fahrzeug, insbesondere durch Einrasten, Vernieten, Verschrauben, Verkleben oder auch Verschweißen, aufweist.

## Claims

1. A motor vehicle exterior part comprising an illuminating fabric (200) and a support (300; 310; 320; 330; 340) for receiving the illuminating fabric, **characterized in that** the illuminating fabric (200) comprises a lit portion (201) including optical fibers and an unlit fixing portion (202), the support (300; 310; 320; 330; 340) comprising means for assembling the illuminating fabric (200) into the support (300; 310; 320; 330; 340), which means cooperate with the fixing portion (202) of the illuminating fabric (200), only the lit portion(201) being equipped with optical fibers.

2. The exterior part according to the preceding claim, wherein the support (300; 310; 320; 330; 340) comprises an interior portion (311; 321; 331; 341) and an exterior portion (312; 322; 332; 342), the two portions being attached to each other or integrally formed so as to sandwich the illuminating fabric (200).

3. The exterior part according to the preceding claim, wherein the exterior portion (312; 322; 332; 342) comprises a transparent zone (316; 326; 336; 346) at least partially covering a lit portion (201) of the illuminating fabric (200).

4. The exterior part according to claim 2, wherein the exterior portion (312; 322; 332; 342) comprises a frame that leaves a lit portion (201) of the illuminating fabric (200) at least partially uncovered.

5. The exterior part according to any one of claims 2 to 4, wherein the support (300; 310; 320; 330; 340) includes assembling means including elements, such as ribs (333; 334), orifices (323; 343) and pins (324; 344), that are provided on the interior portion (321; 331; 341) and the exterior portion (322; 332; 342) of the support (300; 320; 330; 340), respectively, preferably in a zone corresponding to a fixing portion (202) of the illuminating fabric (200), and that cooperate with one another so as to clamp the fixing portion of the illuminating fabric (200).

6. The exterior part according to any one of the preceding claims, wherein the support (310) is over molded by injection molding material onto the illuminating fabric (200), the illuminating fabric (200) preferably including orifices (204) for the passage of injected material, or the illuminating fabric being treated to allow a good adhesion to the injected plastic material.

7. The exterior part according to any one of the preceding claims, wherein the support (310; 340) is formed by bi-injection molding an opaque first plastic material, such as polypropylene (PP) and/or polyamide (PA), and a transparent second plastic material, such as polycarbonate (PC), polymethyl methacrylate (PMMA), translucent acrylonitrile butadiene styrene (ABS) or even acrylonitrile styrene acrylate (ASA), styrene acrylonitrile (SAN), a blend of acrylonitrile styrene acrylate (ASA) and polycarbonate (PC), or even a blend of polycarbonate (PC) and polyethylene terephthalate.

8. The exterior part according to any one of the preceding claims, wherein the illuminating fabric (200) is connected to a light source (400), for example a light-emitting diode, that is located at a certain distance from the illuminating fabric (200), in a portion of the vehicle that is sheltered from external aggressions.

9. The exterior part according to any one of the preceding claims, wherein the support (300; 310; 320; 330; 340) includes, at its end, one or more slits (317; 327; 337; 347) for passage of optical fibers (203) with a view to connecting the optical fibers to a light source (400).

10. The exterior part according to any one of the preceding claims, wherein the support (300; 310; 320; 330; 340) includes means (305; 315; 325; 335; 345) for fixing the support (300; 310; 320; 330; 340) to the motor vehicle exterior part, in particular by snapping, riveting, screwing, adhesive bonding or even welding.
